# EUROPEAN PATENT SPECIFICATION

(11) **EP 1 712 453 B1**
(45) Date of publication and mention of the grant of the patent: **26.06.2013**
(21) Application number: 06380079.1
(22) Date of filing: 11.04.2006
(51) Int. Cl.: B62D 25/16

(54) **Insulated mudguard for vehicles**
Schall- und wärmegedämmter Kotflügel
Guarde-boue avec isolation pour véhicules

(30) Priority: 15.04.2005 ES 200500862 U
(43) Date of publication of application: 18.10.2006
(73) Proprietor: Möllertech Orense, S.L., 32710 Pereiro de Aguiar (Orense) (ES)
(72) Inventor: Gonzalez Lopez, Alberto; c/o MÖLLERTECH S.A., 32710 Pereiro de Aguiar (Orense) (ES)
(74) Representative: Isern-Jara, Nuria

(56) References cited:
- EP-A1- 0 556 733
- EP-A1- 1 568 579
- WO-A1-93/12966

## Description

This invention refers to an mudguard tread for vehicles.

The field of application of the new invention is the construction of all kinds of automobile vehicles, as well as the repair and/or reconstruction of these vehicles.

The purpose of the new mudguard is to acoustically and thermally insulate the space that houses each of a vehicle's wheels, as well as to absorb the impacts caused by objects or materials that wheels encounter on moving along the roadway.

As is known, the tires of wheels regularly pick up small objects that become housed more or less temporarily in the grooves of the conventional ridging of the treads. These objects often strike the mudguards, due to the forward motion of the vehicles, and result in noise caused by the corresponding impacts.

It is also known that friction of the tires with the surface of the roadway causes the material (rubber) and metal rim of the wheels to heat up, with the resulting transmission of heat to the vehicle's body.

Thus it is desirable to eliminate, or at the very least appreciably reduce, this transmission of heat and of the noise produced when driving vehicle, which originates in the space surrounding each of the wheels.

Also, it is known from EP-A-0556773, which disclosure is taken as bass for the preamble of claim 1, a mudguard flap which comprises two panels superposed to each other, including one of them a plurality of projecting elements to form drainage channels. However, this above arrangement is more complex to manufacture since it has two parts to be joined whereby involving an additional step during manufacturing process. Besides, another disadvantage to be noted is the presence of two superposed panels so that an overdimensioned of curved area wherein a wheel is mounted is present. Accordingly, there is a risk to damage said wheel during driving since gap between outer surface of the mudguard and tyre tread of wheel is shorter.

This objective is achieved by using the insulated mudguard proposed by this invention, which provides means to neutralize the impact of objects picked up by the wheels and the corresponding noise, and to considerably reduce the amount of heat that could be passed on to the body and other parts of the vehicle.

For this purpose, a material is applied to some zones on the inside surface of the mudguard; this material is characterized by its noise absorbing capability and its reduced heat transmission capability.

To facilitate the explanation, this description is accompanied by some drawings that show, by way of an illustrative, non-limitative example, an execution of an insulated mudguard for vehicles, according to the principles of the claims.

In the drawings:

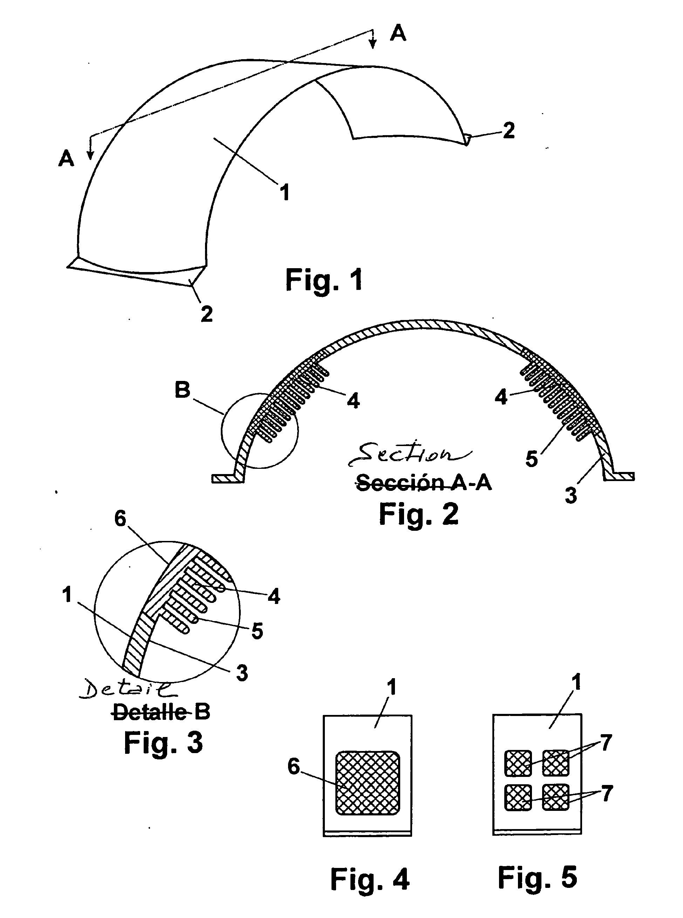

Figure 1 is a view in perspective of a mudguard to which this invention refers, and figure 2 is a section of the mudguard in the drawing indicated as A-A.
Figure 3 shows a detail of the new mudguard structure on a larger scale.
Figures 4 and 5 are side views of the new mudguard device, according to two executions.

The elements designated with number in the drawings correspond to the parts indicated below.

A conventional mudguard essentially consists of a laminar section in the form of a curved band 1, with elements on the sides and at the ends 2 for coupling it the vehicle body, specifically to the wheel zones and surrounding zones.

Tread 1 preferentially executed with metal plate of a suitable thickness to provide it with the necessary rigidity and resistance, or else with molded synthetic material (plastic), and inherent in this material is transmission to the bodywork of the noise caused by impacts and the heat generated by the wheel.

Characteristically, the new mudguard has on its internal surface 3 one or more zones 4 of a material with marked noise absorption properties (e.g., of a porous, spongy or reticular structure) and also a low heat transmission rate, thus impeding the passage of heat from the wheels to the section of tread 1.

The insulating material 4 may be in the shape of a smooth band or else be provided with numerous recesses and projections by way of bristles or spikes 5, forming an extensive area on the inside of the mudguard. It is integral with section 1, and in the event that this is executed by molding a synthetic material, material 4 can be incorporated by means of bi-injection or over-injection techniques.

In the case of a metal mudguard, material 3 will be incorporated into section 1 in an operation subsequent to tooling of the mudguard plate.

Material 4 can consist of a coating that covers the entire internal surface 3 of the mudguard, of else consist of a zone 6 applied on this surface or on several zones 7 distributed along it.

## Claims

1. Insulated mudguard tread for vehicles, including on the inside surface of the curved section (1) forming the mudguard tread, at least one zone (4) of an absorbent material for the impacts caused by objects eventually picked up by the corresponding wheel and that lead to noise in the tread; the material in this zone (4) also has a low heat transmission rate, **characterized in that** the material of zone (4) is a single piece integral with the material forming the section (1) of the tread.

2. Insulated mudguard tread for vehicles, according to claim 1, **characterized by** the fact that the material of zone (4) consists of a coating of the entire internal surface of the tread zone (1).

3. Insulated mudguard tread for vehicles, according to claim 1, **characterized by** the fact that the material of zone (4) consists of one part delimited by the internal surface (3) of the section (1), located on certain regions of this internal surface.

4. Insulated mudguard tread for vehicles, according to claim 1, **characterized by** the fact that zone (4) consists of a piece of material different from the one forming the section (1) of the tread.

## Patentansprüche

1. Kotflügel mit Isolierung für Fahrzeuge, der auf der Innenseite des den Kotflügel bildenden gebogenen Teils (1) mindestens einen Bereich (4) aufweist, der aus einem Material gebildet ist, das von ggf. vom jeweiligen Reifen hochgeschleuderten Gegenständen verursachte, geräuschvoll auf dem Kotflügel aufprallende Schläge absorbiert, wobei das Material in diesem Bereich (4) einen niedrigen Wärmeübergangskoeffizienten aufweist, **dadurch gekennzeichnet, dass** das Material in diesem Bereich (4) mit dem den Abschnitt (1) des Kotflügels bildenden Material einstückig ausbildet ist.

2. Kotflügel mit Isolierung für Fahrzeuge nach Anspruch 1, **dadurch gekennzeichnet, dass** das Material im Bereich (4) aus einem die gesamte Innenfläche des Bereichs (1) des Kotflügels überziehenden Belag besteht.

3. Kotflügel mit Isolierung für Fahrzeuge nach Anspruch 1, **dadurch gekennzeichnet, dass** das Material im Bereich (4) aus einem von der Innenfläche (3) des Abschnitts (1) abgegrenzten Teil besteht, der sich in bestimmten Bereichen dieser Innenfläche befindet.

4. Kotflügel mit Isolierung für Fahrzeuge nach Anspruch 1, **dadurch gekennzeichnet, dass** der Bereich (4) aus einem Teil besteht, das aus einem anderen Material als das den Abschnitt (1) des Kotflügel bildende Teil gebildet ist.

## Revendications

1. Garde-boue avec isolation, pour véhicules, comprenant sur la surface intérieure de la partie courbée (1) qui forme le garde-boue, au moins, une zone (4) constituée d'un matériau absorbant les impacts provoqués par des objets éventuellement recueillis par la roue correspondante, et qui provoquent des bruits dans le garde-boue ; ce matériau ayant aussi dans ladite zone (4) un faible coefficient de transmission de la chaleur, **caractérisé en ce que** le matériau de la zone (4) est une pièce unique s'intégrant avec le matériau qui forme la section (1) du garde-boue.

2. Garde-boue avec isolation pour véhicules, selon la revendication 1, **caractérisé en ce que** le matériau de la zone (4) consiste en un revêtement de toute la surface interne de la zone (1) du garde-boue.

3. Garde-boue avec isolation pour véhicule, selon la revendication 1, **caractérisé en ce que** le matériau de la zone (4) consiste en une partie délimitée par la surface interne (3) de la section (1), située dans certaines zones de ladite surface interne.

4. Garde-boue avec isolation pour véhicules, selon la revendication 1, **caractérisé en ce que** la zone (4) consiste en une pièce constituée d'un matériau différent de celui qui forme la section (1) du garde-boue.
